# EUROPEAN PATENT SPECIFICATION

(11) **EP 1 587 388 B1**
(45) Date of publication and mention of the grant of the patent: **14.05.2008**
(21) Application number: 03783267.2
(22) Date of filing: 07.11.2003
(51) Int. Cl.: A44B 1/00

(54) **ACTIVE FASTENERS**
KLETTVERSCHLÜSSE
ATTACHES ACTIVES

(30) Priority: 08.11.2002 US 291003
(43) Date of publication of application: 26.10.2005
(73) Proprietor: VELCRO INDUSTRIES B.V., Curacao (AN)
(72) Inventor: TACHAUER, Ernesto, S., Bedford, NH 03110 (US); NEEB, Alexander, J., Alpharetta, GA 30022 (US); KURTZ, Wallace, L., Jr., Lunenburg, MA 01462 (US); PIERCE, Joseph, E., Appleton, WI 54915 (US)
(74) Representative: Müller-Boré & Partner Patentanwälte
(86) International application number: PCT/US2003/035698
(87) International publication number: WO 2004/043186

(56) References cited:
- WO-A2-01/84002
- WO-A2-02/45536
- US-A- 5 518 795
- US-A- 5 997 981
- US-B1- 6 281 262
- US-B1- 6 336 928
- US-B1- 6 598 274

## Description

### TECHNICAL FIELD

This invention relates to a fastener product of the hook and loop type, a method of forming a fastener product and an absorbent article using a fastener product according to the preambles of claims 1, 10 and 20.

### BACKGROUND

Arrays of molded male fastener elements, e.g., hooks, are often formed integrally with a sheet-form base, to provide a sheet-form male fastener component. This component can then be engaged with a similar component of female fastener elements to form a "hook and loop" fastener. It is desirable that the fastener elements have good strength and toughness, so as to provide strong engagement during repeated use of the fastener.

Such male fastener components can be produced in a continuous molding process described by Fischer in U.S. Patent No. 4,794,028, Male fastener components generally have small hook members integrally molded to extend from a broad side of the sheet form base, and each hook member generally has a head portion overhanging the base to form an engageable crook in at least one direction along the longitudinal molding direction of the hook tape. Mushroom-type hook fasteners, such as disclosed under WO-A-01/84002 may be formed by molding stems in a Fischer-type continuous molding process, and then flattening the ends of the molded stems to form heads overhanging the base in generally all directions. Hook-type fasteners are also known from WO-A-02/45536.

### SUMMARY

The inventors have recognized that in some cases it may be advantageous to have a male fastener element change its shape in response to an environmental change such as a change in temperature.

For instance, it may be desirable for safety reasons to have an engaged hook and loop fastener disengage when a certain temperature is reached, e.g., during a fire. In this case, the change in shape would be from a normal hook shape to a relatively straighter shape in which the crooks of the hooks would no longer engage the female fastener elements.

Alternatively, it may be desirable to have a hook and loop fastener engage when a certain temperature is reached. In this case, the change in shape would be from a non-engaging shape, e.g., a relatively straight shape or a flattened shape, to a hook shape that would engage female fastener elements.

To achieve this temperature-responsiveness, we have incorporated shape memory polymers into male fastener elements of a hook and loop fastener. As will be discussed below, the shape memory polymer renders the male fastener elements capable of changing shape in a predetermined way in response to temperature changes. In the safety applications described above, for example, the male fastener element can be initially molded as a straight stem, then deformed at an elevated temperature to a metastable loop-engaging shape and then cooled to "set" the element in this metastable shape. When re-exposed to elevated temperature, the fastener element returns to an approximation of its initial shape, losing its loop-engaging ability.

If it is desirable that the hook and loop fastener have a weaker strength at elevated temperature, rather than completely disengaging, the fastener may include some hooks formed of shape memory polymer and other hooks formed of a conventional polymer. In this way, it is possible to adjust the strength characteristics (e.g., shear and peel) of the fastener as a function of temperature. The change in properties in response to a temperature change may be an "on-off" change, from full engagement to full disengagement, or a gradual change, e.g., if several different shape memory polymers having different transition temperatures are included in the fastener.

Shape-changing fastener elements are useful in other applications. For instance, male fastener elements may be initially molded in a loop-engaging shape, e.g., a hook shape, and then heated to an elevated temperature and deformed to a relatively straighter metastable shape and cooled. In this case, when the element is reheated to the elevated temperature, it will return to the loop-engaging shape. Thus, for example, the fastener element may be used as a projection for securing a product to a panel with a blind hole, e.g., in the assembly of automotive trim. The straight, metastable projection is inserted through the hole, and is then heated so that it returns to its original shape and its loop-engaging portion crimps the panel to the product. Other uses for this type of fastener include "single use" fasteners that engage a loop material firmly and without free motion until disengaged. In this case, for example, the straight, metastable projections can be used to penetrate a dense mat of loops or fibers, and then reheated to capture the loops or fibers and pull the loop product firmly into engagement with the male fastener.

Similarly, instead of straightening the hooks at the elevated temperature, the hooks can be flattened against the base sheet, e.g., by pulling the sheet of fastener elements through a calendar. In this implementation, the hooks will be "latent" (will remain in the flattened position) until the fastener is exposed to an elevated temperature, when the hooks will be activated (will return to their original, loop-engaging position).

In one aspect, the invention features a fastener product including a sheet form backing, and, extending from the backing, a plurality of male fastener elements each including a loop-engaging portion and a stem portion. One of the loop-engaging portion or stem portion includes a shape memory polymer, and the other of the loop-engaging portion or stem portion includes a non-shape memory polymer.

Some implementations include one or more of the following features. The fastener elements include hooks, mushroom shapes or palm tree shapes. The sheet form backing is formed of a non-shape memory polymer. The fastener elements include more than one shape memory polymer, and the shape memory polymers have different glass transition temperatures. The glass transition temperature of the shape memory polymer is from about -40 to 150 °C. The glass transition temperature of the shape memory polymer is from about 60 to 100 °C. The shape memory polymer includes a polyurethane. The fastener element is configured to change from a metastable hook or mushroom shape to a stable substantially non-engaging shape in response to a temperature change. The substantially non-engaging shape is a substantially straight stem. The substantially non-engaging shape is a bent-over hook or mushroom shape. The fastener element is configured to change from a metastable substantially non-engaging shape to a stable hook or mushroom shape in response to a temperature change, or to UV radiation.

A fastener product includes a sheet form backing, and, extending from the backing, a plurality of male fastener elements comprising a shape memory polymer. The fastener elements can be configured in various ways. In some instances, the fastener elements are configured to change from a metastable engaging hook shape to a stable partially engaging shape, the partially engaging shape being configured such that a stem portion of the fastener elements defines a curve (e.g., an s-shape, double or triple s-shape, a zigzag, a coil, etc.). Alternatively, the fastener elements may be configured to change from a stable engaging hook shape to a metastable partially engaging shape, the partially engaging shape being configured such that a stem portion of the fastener elements defines a curve (e.g., an s-shape, double or triple s-shape, a zigzag, a coil, etc.). The hooks may also be configured to change from a metastable engaging position to a stable non-engaging position, the non-engaging position being configured so the stem portion of the hook is bent over into a substantially horizontal position relative to the sheet form backing. In yet another alternative implementation, the hooks are configured to change from a stable engaging position to a metastable non-engaging position, the non-engaging position being configured so the stem portion of the hook is bent over into a substantially horizontal position relative to the sheet form backing.

Some implementations include one or more of the following features. The male fastener elements include two or more shape memory polymers. The male fastener elements include a stem portion including a first shape memory polymer and an engaging portion including a second shape memory polymer, and the first shape memory polymer is different from the second shape memory polymer. The male fastener elements include a stem portion including a shape memory polymer and an engaging portion including a non-shape memory polymer.

A fastener product includes a sheet form backing, and, extending from the backing, a plurality of fastener elements comprising a blend of two or more shape memory polymers.

Some implementations include one or more of the following features. Each fastener element includes at least two shape memory polymers. A first set of the fastener elements includes a first shape memory polymer, and a second set of the fastener elements includes a second, different shape memory polymer. The shape memory polymers are selected to modulate a change in the physical properties of the fastener product as a function of temperature.

It is provided a method of forming a fastener product including forming a plurality of fastener elements extending from a sheet form base, at least some of the fastener elements comprising a shape memory polymer.

Some implementations may include one or more of the following features. The molding step includes forming male fastener elements, e.g., hooks. The hooks include crooks and stems, and the crooks are formed of a shape memory polymer. The stems include a non-shape memory polymer. The method further includes co-extruding the shape memory polymer and the non-shape memory polymer to form the sheet-form base, wherein the forming step includes forming the fastener elements from a portion of the sheet-form base. The fastener elements include more than one shape memory polymer, and the shape memory polymers have different glass transition temperatures. The method further includes co-extruding the shape memory polymers to form the sheet-form base, wherein the forming step includes forming the fastener elements from a portion of the sheet-form base. The glass transition temperature of the shape memory polymer is from about -40 to 150 °C. The glass transition temperature of the shape memory polymer is from about 60 to 100°C. The forming step includes forming fastener elements having a substantially non-engaging shape. The method further includes heating the fastener elements to a formation temperature and deforming the fastener elements to a metastable hook or mushroom shape. The substantially non-engaging shape is a substantially straight stem. The substantially non-engaging shape is a bent-over hook or mushroom shape. The forming step includes forming fastener elements having a hook or mushroom shape.

A method of attaching a fastener product to a substrate includes: inserting a substantially straight stem of the fastener product through a blind opening in the substrate so that a terminal portion of the stem extends beyond the opening, the stem including a shape memory polymer in a metastable state; and heating the terminal portion of the stem to a temperature at which the shape memory polymer returns to a stable state in which the configuration of the terminal portion provides an interference fit that prevents the stem from being removed from the opening.

The invention also features absorbent articles including the fastener products described above. In one aspect, the invention features an absorbent article including: (a) a disposable garment including an absorbent material; and (b) a fastener for securing the garment on a wearer, the fastener comprising a female fastener component on a first portion of the garment, and a male fastener component on a second portion of the garment, arranged for cooperative engagement with the female fastener component; the male fastener component including a plurality of male fastener elements comprising a shape memory polymer.

Some implementations may include one or more of the following features. The article is selected from the group consisting of diapers and incontinence products. The male fastener elements include hooks. The shape memory polymer is selected to modulate a change in the physical properties of the fastener as a function of temperature. The shape memory polymer is selected to modulate the change in the physical properties of the fastener when it is heated from ambient temperature to the surface temperature of a wearer of the article.

A fastener product includes a sheet form backing comprising a shape memory polymer, and, extending from the backing, a plurality of fastener elements. The invention also features absorbent articles including such fastener products.

In some implementations the shape memory polymer is selected to modulate the change in the physical properties of the fastener when it is heated from ambient temperature to the surface temperature of a human.

A fastener product includes a sheet form backing having an upper face and a lower face; a plurality of male fastening elements including a shape memory polymer extending from the upper face of the sheet form backing, and a plurality of female fastening elements extending from the lower face of the sheet form backing.

Some implementations include one or more of the following features. The male fastener elements include at least two shape memory polymers. The male fastener elements each include a stem and an engaging portion. The stem portion of the male fastener elements includes a first shape memory polymer and the engaging portion of the male fastener elements includes a second shape memory polymer, the first shape memory polymer being different from the second shape memory polymer. The stem portion of the male fastener element includes a shape memory polymer and the engaging portion of the male fastener element includes a non-shape memory polymer. The stem portion of the male fastener element includes a non-shape memory polymer and the engaging portion of the male fastener element includes a shape memory polymer.

The term "shape memory polymer," as used herein, refers to a polymer that exhibits shape memory properties, i.e., that can be shaped to a first "stable" shape, deformed to a second "metastable" shape when heated to a predetermined temperature that is characteristic of the polymer, and cooled to retain this second shape, and that, when reheated to a temperature greater than or equal to the predetermined temperature, will return substantially to its first stable shape.

The term "non-shape memory polymer," as used herein, refers to a polymer that does not exhibit shape memory properties.

The term "partially engaging," is used when referring to fastener elements that have at least two positions, one of which is more engaging than the other. The term "partially engaging" refers to the position that is less engaging, such that a touch fastener, in which substantially all of the fastener elements are in their partially engaging position, has a reduced engagement strength with a loop material relative to the engagement strength with the same loop material when substantially all of the fastener elements are in their engaging position. One measure of engagement strength is closure peel.

A typical procedure to measure closure peel of a touch fastener is as follows: The engaging sides of the touch fastener and a loop material that engages the touch fastener are placed facing each other. The touch fastener is engaged with the loop material over the entire facing surface of the touch fastener. For example, a touch fastener can be engaged with a loop material by rolling a roll of standard characteristics over the back of the loop in a standard way. The degree of engagement of the touch fastener to the loop material is then measured by determining the peel force. Peel force can be measured by peeling apart a small section of the touch fastener at the end of the closure, e.g, by placing the end of the touch fastener in the jaws of a tensile testing machine, and disengaging the touch fastener and the loop in the machine under standard conditions. For example, a set of conditions includes placing the hook in the upper jaw and the loop in the lower jaw and separating the material at 12 in/min. Tensile testing machines are manufactured, for example, by Instron Corp.

Acceptable loop materials for use in testing engagement strength, e.g., closure peel, include the non-woven loop products disclosed in U.S. Serial No. 08/922,292, filed September 3, 1997, now U.S. Patent 6,342,285.

Other features and advantages of the invention will be apparent from the description and drawings, and from the claims.

### DESCRIPTION OF DRAWINGS

FIG 1 is a side cross-sectional view of a male fastener according to one embodiment of the invention, with the two positions of the hook shown in solid and dotted lines.
FIG 2 is a side cross-sectional view of a male fastener according to an alternate embodiment of the invention.
FIG. 3 is a side cross-sectional view of a male fastener according to another alternate embodiment of the invention.
FIG. 4 is a diagrammatic view of a process for making the fastener of FIG 1.
FIG 5 is a diagrammatic view of a process for making the fastener of FIG. 2 or 3.
FIGS. 6 and 7 are diagrammatic views of alternate processes for making the fastener of FIG. 2 or 3.
FIG. 8 is a diagrammatic view of an alternate process for making a fastener product.
FIGS. 8A-8C are enlarged views of detail A in FIG. 8, according to different embodiments of the invention.
FIG. 9 is a top view of a fastener product produced using the process shown in FIGS. 8 and 8C.
FIGS. 10-10C are side cross-sectional views of male fasteners according to various alternate embodiments of the invention.
FIGS. 11-11B are side cross-sectional views showing a fastener being attached to a panel.
FIG. 12 is a schematic perspective view of a personal care product including a fastener product according to one aspect of the invention.
FIGS. 13 and 13A are diagrammatic side views of a fastener element in two states of engagement.
FIGS. 14A and 14B are diagrammatic side views of a fastener element in two states of engagement.
FIGS. 15A and 15B are diagrammatic side views of a fastener element in two states of engagement.
FIG. 15C is a diagrammatic side view of a method of manufacturing the touch fastener depicted in FIGS. 15A and 15B.
FIGS. 16A-16D are side views of a touch fastener product having male fastener elements extending from one face of the sheet form backing and female fastener elements extending from the other face of the sheet form backing.
FIG. 17A is a top view of a touch fastener having a lane that is substantially free of male fastener elements and that is surrounded by two lanes of male fastener elements.
FIG 17B depicts the fastener element of 17A after further processing.

### DETAILED DESCRIPTION

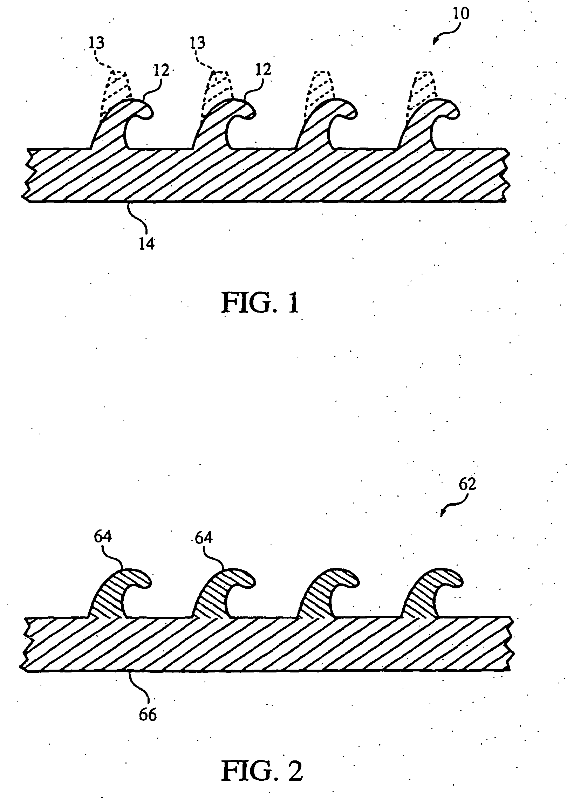

Referring to Fig. 1, fastener 10 includes a plurality of hook-shaped fastener elements 12 that are integral with, and extend from, a sheet-form base 14. The fastener 10 is formed of a shape memory polymer. During normal use, the hooks 12 remain in the position shown in solid lines. However, when the hooks are exposed to a predetermined elevated temperature (or a temperature higher than the predetermined temperature) the hooks straighten out, forming relatively straight projections 13, as indicated in dotted lines in Fig. 1. This change in shape is the result of the shape memory polymer changing from its metastable position (the more bent shape) to its stable position (the straighter projection shape).

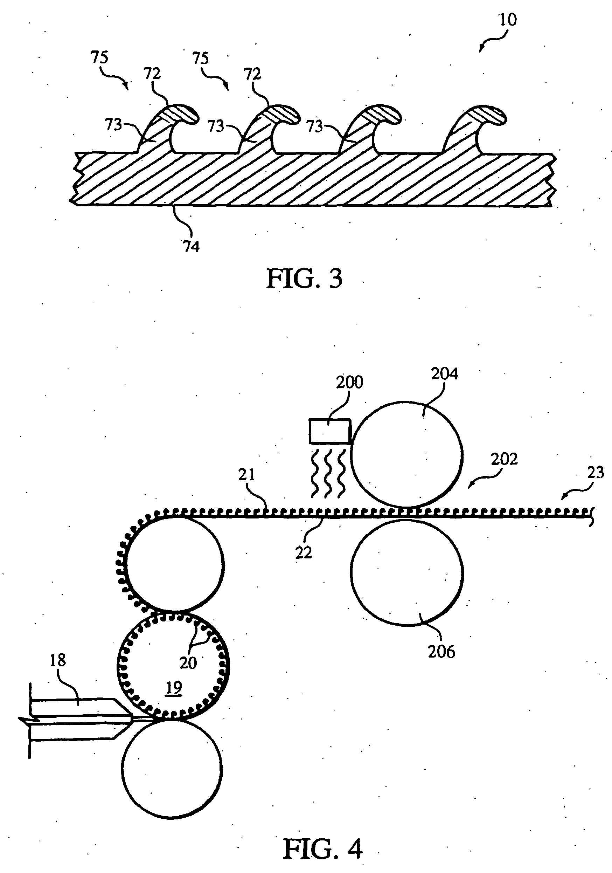

Fig. 4 illustrates a suitable process for forming fastener 10. A shape memory polymer 16 is extruded by extruder 18 onto a roll 19 having forming cavities 20 that have the shape of straight projections 13 in Fig. 1. A roll suitable for use as roll 19 is described, e.g., in U.S. Patent No. 4,872,243.

This results in straight projections 21 extending from a base 22. The shape memory polymer is generally extruded at a temperature that is in the "fluid temperature region" of the polymer, i.e., at a temperature at which the polymer will flow readily. This temperature range is generally significantly higher than the glass transition temperature of the polymer, e.g., at least 100 °C above the glass transition temperature. The resulting projections are the stable shape of the shape memory polymer.

It is noted that this molding procedure can be replaced by any desired method of molding male fastener elements on a base, e.g., the processes described in U.S. Patent Nos. 4,894,060, 4,794,028 and 5,441,687.

The resulting projection-carrying base 22 then passes to a station 200, where the projections are heated to a temperature that is generally not more than about 5 to 30 °C above the glass transition temperature of the shape memory polymer. If the projections are heated to too high a temperature, the deformation that takes place in the next step of the process may be partially or completely irreversible.

Next, the base 22 passes through a nip 202, between rolls 204 and 206, causing the heated projections 21 to be flat-topped, changing the initial, as-molded straight shape to metastable hook or mushroom shaped male fastener elements 23. The male fastener elements are then cooled (not shown), e.g., with cool air or water, to set them in the metastable position. Cooling the fastener elements results in the recovery of the elastic modulus of the polymer. Cooling is generally performed as quickly as possible after deformation is complete. If desired, cooling may begin during the deformation process, as long as the desired degree of deformation can still be achieved.

The temperature to which the projections were heated in station 200 is substantially equal to the temperature at which the finished fastener product will change from its metastable shape to its stable shape, i.e., from hooks to straight projections in the embodiment shown in Fig. 1.

Fig. 2 shows a fastener 62 in which the hooks 64 are formed of a shape memory polymer and the base 66 is formed of a second polymer, e.g., a non-shape memory polymer. Fig. 3 shows a fastener 70 in which only the hook tips 72 are made of the shape memory polymer, and the base and a lower portion 73 of the hooks 75 is formed of a second polymer. These configurations may be advantageous from a cost standpoint, as shape memory polymers tend to be relatively expensive and in many applications only the crooks of the hooks need to be movable between the metastable and stable positions. In these embodiments, as in the embodiment shown in Fig. 1, the hooks are the metastable position of the shape memory polymer, and when exposed to heat the hooks will straighten out to the as-molded, straight position (not shown in Figs. 2-3).

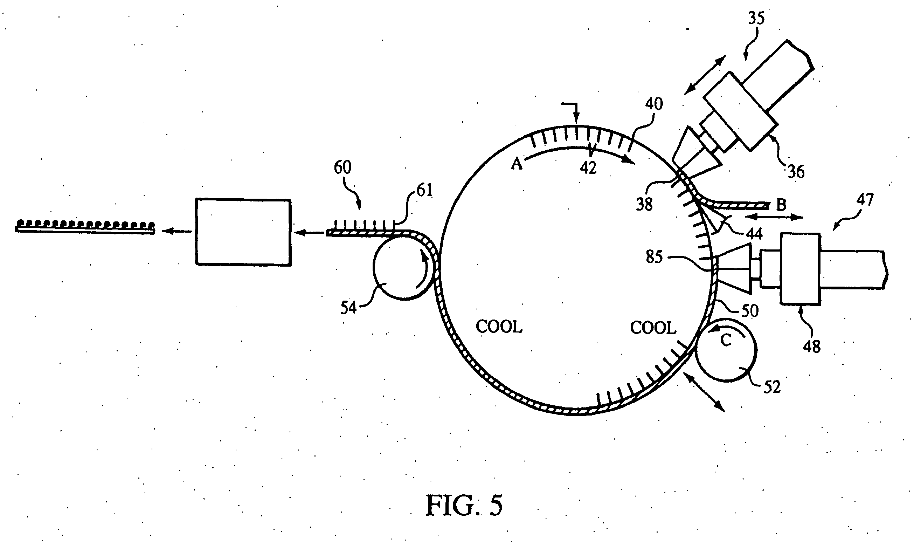

A suitable process for forming a two-polymer fastener, e.g., as shown in Fig. 2 or Fig. 3, is shown in Fig. 5. A first extruder 35 extrudes a shape memory polymer 38 onto mold roll 40, forcing some of the polymer into projection-forming cavities 42 and leaving a layer of polymer on the surface of the mold roll. As mold roll 40 rotates in the direction of arrow A, doctoring blade 44 removes the polymer on the surface of the mold roll without disturbing the polymer in cavities 42. The removed polymer, which has been exposed to air while on the mold roll and may have begun to solidify, may be either discarded or recycled. The thickness of polymer left on the surface of the roll by the doctoring blade will depend, in part, on how close the blade is positioned to the surface of the mold roll (the position is adjustable in the direction indicated by arrow B). In some cases, the sharp, distal end of blade 44 rides against the mold roll, thereby literally scraping off essentially all of the polymer on the surface of the roll. In such cases it is recommended that the end of the blade be coated with a lubricious material to avoid damaging the surface of the mold roll. In other cases, the position of the blade is adjusted to leave a predetermined thickness of polymer on the roll, to become a part of the base of the product. In such cases, the doctoring blade effectively trims the polymer thickness rather than actually "scraping" against the surface of the roll.

Next, a second extruder 47 extrudes a second, base-forming polymer 50 (generally a non-shape memory polymer) onto the surface of the mold roll (or onto any of polymer 38 left on the surface of the roll by blade 44). A gear pump 36, 48, is positioned at the outlet of each extruder, to accurately control the rate of polymer delivered to the mold roll. The final thickness of the base of the product is then adjusted by roll 52, rotating in the direction of arrow C, and the fastener product 60, carrying projections 61, is stripped from the mold roll 40 by passing it around exit roll 54.

The projections 61 are then heated, and then subjected to the flat-topping process shown in Fig. 4, or any other desired deformation process, to deform the projections 61 into a metastable male fastener shape.

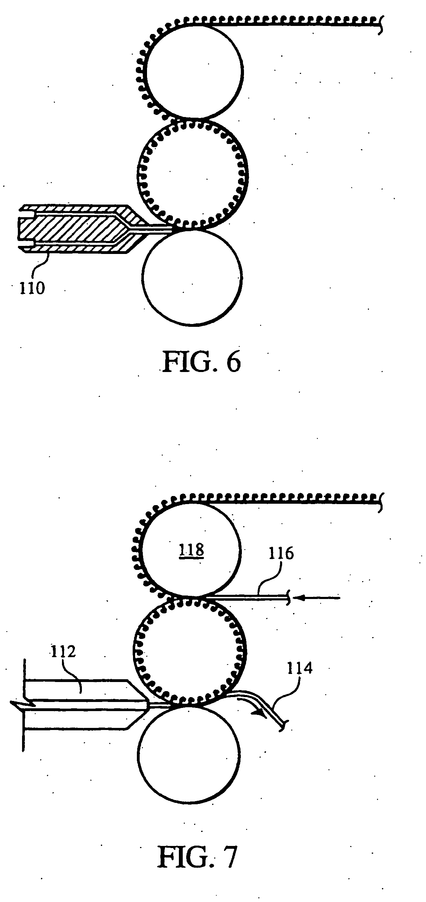

Figs. 6 and 7 show alternative processes for forming a two-polymer fastener. In the process shown in Fig. 6, the first and second polymers are applied to the mold roll by a coextruder 110. In the process shown in Fig. 7, the shape memory polymer is applied to the mold roll by an extruder 112, and most of the polymer is scraped from the surface of the mold roll by a doctoring blade 114, leaving a thin film of polymer, as described above with reference to Fig. 5. The base-forming polymer 116 is then laminated to the thin film of hook-forming polymer while the latter is still on the mold roll, such as in the nip between the mold roll and roll 118, as shown. In each of these processes, the resulting product is then heated and flat-topped or otherwise deformed, and cooled to set the fasteners in the metastable position, as described above.

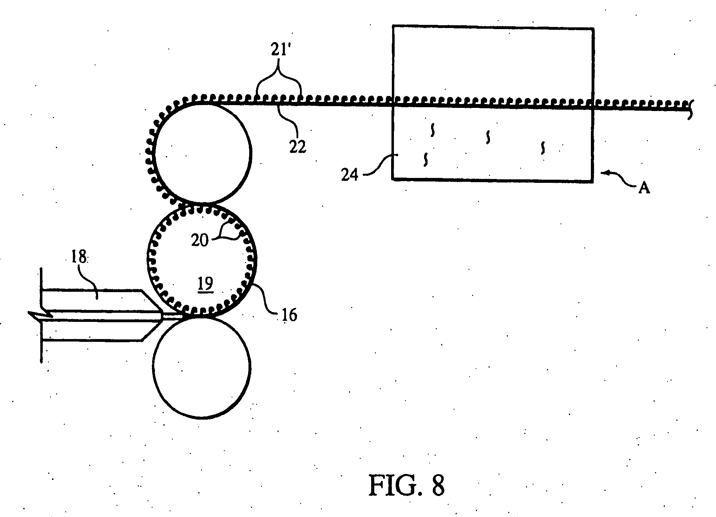

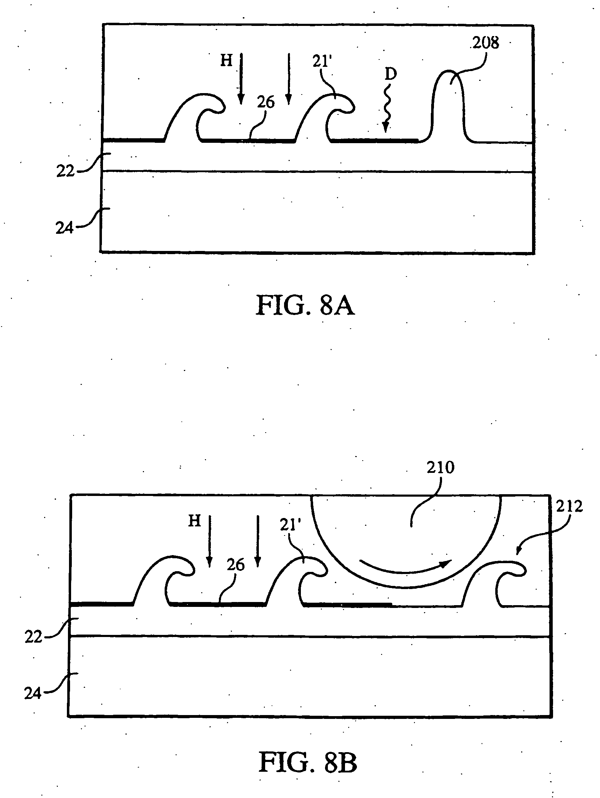

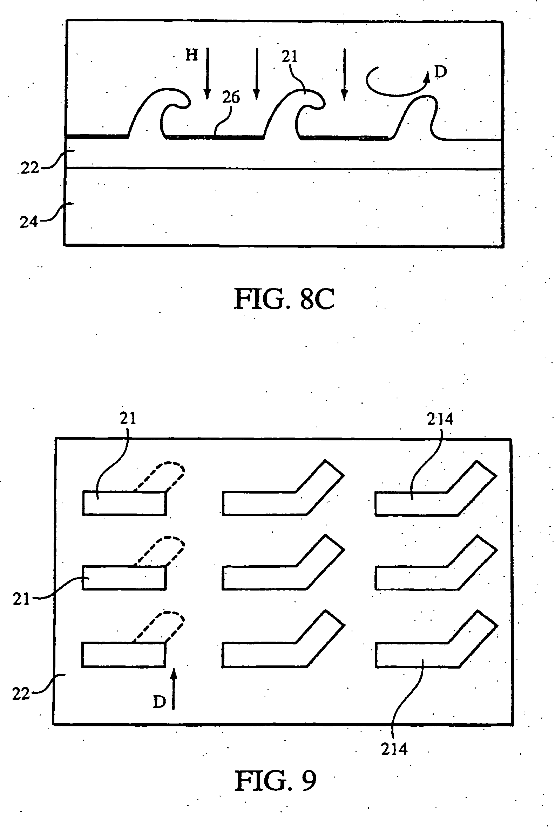

Fig. 8 shows a process similar to that shown in Fig. 4 and described above, except that mold cavities 20' are hook-forming cavities, resulting in hooks 21' carried on base 22. Thus, in this case the stable form of the fastener elements is a hook shape. The base 22 is then passed through a processing station 24, in which the hooks 21 are deformed to a different, metastable position. Suitable processing stations are shown, for example, in Figs. 8A-8C.

In Fig. 8A, the hooks 21' are heated (arrows H), and then deformed (arrow D) to form straight projections 208. The hooks may be straightened, e.g., by engaging the hooks with a screen, heating the screen and at least the crooks of the hooks, and pulling the screen away from base 22. When straightening the hooks, it may be desirable to have the hooks facing downwards, so that gravity assists with the straightening process. If desired, a cooling fluid 26 can be applied to the base 22 during heating, to protect the base.

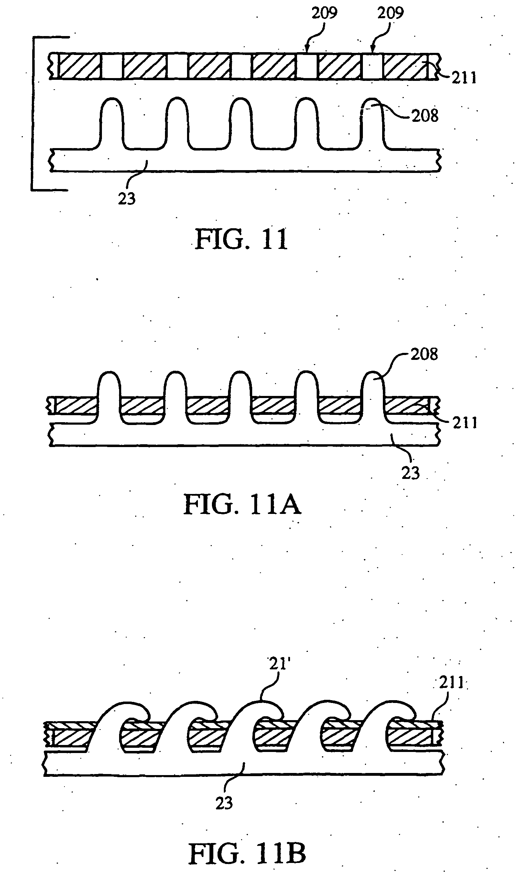

In the embodiment shown in Fig. 8A, when the metastable straight projections are reheated to the temperature to which they were exposed in processing station 24 (or a higher temperature), the projections will return to the initial hook shape. As discussed above, this fastener product is useful, e.g., for securing a product to a panel with a blind hole by inserting the straight projection 208 through the hole, and then heating the projection so that it returns to its hook shape and crimps the panel to the product (see, e.g., Figs. 11-11B, in which projections 208 are inserted through holes 209 to secure a panel 211 to the fastener). This fastener product is also useful in single use fasteners, as discussed above.

In Fig. 8B, the hooks 21' are heated (arrows H) and then deformed, e.g., by a roll 210 or other application of downward pressure, to form flatter hooks 212. Thus, for example, a "J' shaped hook can be crooked further down from the original shape. In this case, the shape memory polymer can be used to form a shape that would be difficult to mold using conventional methods. If it is desired that the hook shape 212 be the permanent shape of the fastener element, a shape memory polymer is selected that has a forming temperature that is higher than the expected use temperature of the product, so that the shape memory polymer will not return to its original position during use.

In Fig. 8C, the hooks 21' are heated and then deflected by a force D, directed into the plane of the paper. This force causes the crooks of the hooks to be deflected out of the plane of the fastener element to form deflected hooks 214, shown in Fig. 9 (a top view of the fastener product). Again, the shape memory polymer is used to form a shape that would be difficult to mold using conventional methods. If it is desired that the hook shape 214 be the permanent shape of the fastener element, a shape memory polymer is selected that has a forming temperature that is higher than the expected use temperature of the product.

Advantageously, due to the relatively low glass transition temperatures of shape memory polymers, post-molding deformation, e.g., as shown in Figs. 8B and 8C, can be performed at relatively low temperatures, allowing lower temperature processing equipment to be used relative to the equipment that is generally required to perform similar processing steps on a conventional non-shape memory polymer. Thus, it may be advantageous to use a shape memory polymer to obtain a desired fastener element shape, even if shape memory properties will not needed when the fastener product is in use.

Suitable shape memory polymers are described, e.g., in U.S. Patent Nos. 5,145,935, 5,189,110 and 4,051,217, the disclosures of which are incorporated herein by reference. Shape memory polymers are also described in WO 86/03980. Suitable shape memory polymers are commercially available from the Diaplex division of Mitsubishi Heavy Industries.

Preferably, the shape memory polymer is thermoplastic, so that it can be processed using conventional molding techniques. A thermoplastic shape memory polymer is described in U.S. Patent Number 5,145,935. This polymer is a polyurethane elastomer, which has a degree of crystallinity of 3 to 50 weight percent, contains approximately equal amounts of [NCO] groups and [OH] groups at the terminals of the polymer, and is polymerized by the prepolymer method from a difunctional diisocyanate, a difunctional polyol, and a difunctional chain extender containing active hydrogen groups. These compounds are formulated in a molar ratio of diisocyanate to polyol to chain extender of 2.0-1.1:1.0:1.0-0.1, e.g., 1.8-1.2:1.0:0.8-0.2. The polymer may exhibit a ratio of the tensile modulus at a temperature 10°C higher than the glass transition temperature to the tensile modulus at a temperature 10°C lower than the glass transition temperature of from 50 to 250 (the tensile modulus being measured according to Japanese Industrial Standards (JIS) K7113). Generally, the glass transition temperature of these polymers is in the range of -50°C to 60°C.

An important consideration when selecting the glass transition temperature is the operating temperature that the fastener will see in a given application. It is desirable, for reasons of cost and ease of processing, that the "formation" temperature at which the polymer is deformed to its metastable shape (which is equal to or slightly above the glass transition temperature) be relatively low. However, the formation temperature generally must be higher than the highest expected normal operating temperature, so that, in use, the fastener does not take on its metastable shape under normal temperature conditions. If the highest operating temperature will be around room temperature, it is generally preferred that the glass transition temperature be from about 60 to 100°C. If the fastener will see higher temperatures under normal conditions, e.g., if the fastener will be used in the trunk of a car, the glass transition temperature is adjusted upwards accordingly. Preferably, the glass transition temperature is about 30 to 80°C higher than the highest expected normal use temperature.

These polymers may be obtained by reacting the isocyanate component and polyol component without catalyst to obtain a prepolymer. After the completion of the reaction, the chain extender is added, the mixture is defoamed and poured into a mold, and a cross-linking reaction is performed, e.g., at a temperature of 80°C for one to two days in a constant temperature dryer, resulting in the polyurethane elastomer. The synthesis may be performed with either a solvent or non-solvent system. The polyurethane elastomer can be represented by the following general formula:

HOR"OCONH(RNHCOOR'OCONH')*ₙ*RNHCOOR"OCONH(RNHCOOR')-OCONH)*ₘ*RNHCOOR"OH

where n=0-16 and m=1-16.

Preferably, the non-shape memory polymer, if one is included (e.g., in the embodiments shown in Figs. 2 and 3), is chemically compatible with the shape memory polymer so that it will adhere to the shape memory polymer during coextrusion. If the shape memory polymer is a polyurethane, as discussed above, suitable non-shape memory polymers include other polyurethanes, polyesters that are compatible with polyurethanes, and ABS polymers.

Other embodiments are within the scope of the following claims.

For example, fasteners containing shape memory polymer may be used in many other applications. For instance, in electrical applications the fastener elements may be coated with a coating that is broken by movement of the fastener element from its metastable to its stable position, breaking a circuit. As another example, the release of the hook and loop fastener can be used to perform a function, e.g., to open a valve that is secured by the fastener when the valve is exposed to a predetermined temperature.

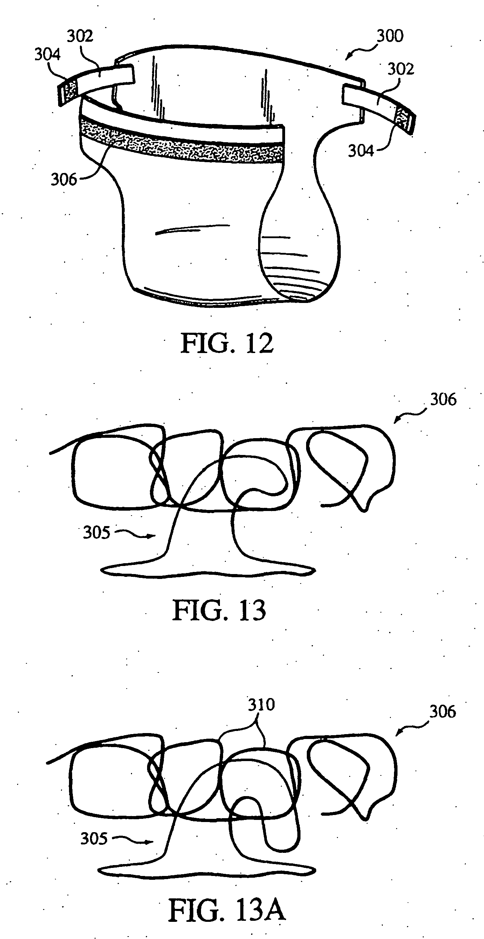

The fasteners can also be used in infant, child and adult personal care absorbent articles such as diapers, training pants, disposable swimwear, incontinence garments and pads, sanitary napkins, wipes and the like. Referring to Fig. 12, for example, an absorbent article 300 may include a pair of tabs 302 that each carry a male fastener strip 304. The absorbent article also includes a corresponding female fastener strip 306 of loop material, arranged for cooperative engagement with fastener strips 304. Fastener strip 304 includes a plurality of hooks of a shape memory polymer that is selected to be responsive to changes in temperature from ambient to the surface temperature of a wearer of the absorbent article. As shown in Fig. 13, in their initial state these hooks 305 are only slightly curled. This hook shape allows for easy engagement, while providing adequate initial strength to hold the absorbent article in place on a wearer. As the user wears the article, the user's body temperature causes the hooks to revert to a normal, more curled hook shape, as shown in Fig. 13A. The more curled hook shape tends to trap fibers 310 of the loop material, increasing the peel and shear strength of the engaged fasteners. As bodily fluid is introduced to the absorbent article, the article will get heavier, putting more stress on the fasteners. The increase in peel and shear strength will compensate for this increased stress, providing a more secure fit and minimizing the possibility of fastener failure during use. The change in hook shape will also tend to maintain the fit of the absorbent article, by preventing the fasteners from "drifting" (i.e., the male fastener strips moving laterally with respect to the female fastener strip in response to shear stress).

It may also be desirable, in personal care articles, for the base of one or both of the fastener strips to be formed of a shape memory polymer, in addition to or instead of forming the fastener elements from a shape memory polymer. Again, the shape memory polymer is selected to be responsive to changes in temperature between ambient and the surface temperature of the wearer of the article. The base is processed so that at ambient temperature it will have an initial generally flat shape, but when heated to the surface temperature of a wearer it will revert to a normal shape that is better suited for use in the garment. For example, the normal shape may be a curved shape, to conform the fastener shape to the body shape of the wearer. Alternatively, the base may contract when it returns to its normal shape, causing the fastener strips to decrease in length and thus hold the garment more snugly in place on the wearer.

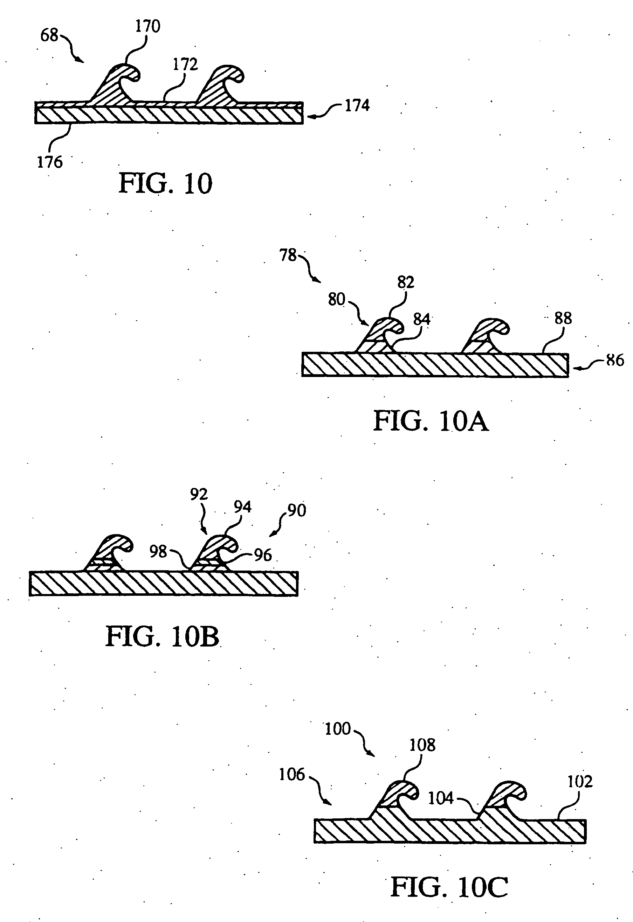

Moreover, the shape memory polymer can be used to obtain many other fastener shapes, in addition to those that are shown in Figs. 8B and 8C by way of example. Also, other combinations of shape memory and non-shape memory polymers can be used, in addition to those shown in Figs. 2 and 3. Examples of other arrangements of multiple polymers are shown in Figs. 10-10C.

Fig. 10 shows a fastener 68 in which the hooks 170 and the upper portion 172 of the base 174 are formed of a shape memory polymer, and the lower portion 176 of base 174 is formed of a second polymer. Using the process shown in Fig. 5, such a fastener can be formed by adjusting doctoring blade 46 away from the mold roll surface so that a thin layer of the first polymer remains on the mold roll surface when the second polymer is applied.

Fig. 10A shows a fastener 78, in which the hooks 80 are formed of a shape memory polymer 82 and a second polymer 84, and the base 86 is formed of a third polymer 88. To form this fastener, the process shown in Fig. 5 is modified so that the first extruder 35 applies an amount of the shape memory polymer that only partially fills the mold cavities, and then another extruder (not shown in Fig. 5) applies the second hook-forming polymer to completely fill the cavities. The process then continues as shown in Fig. 5, with scraping and application of the base-forming polymer by extruder 47. This arrangement may be useful, for example, if the polymers 82, 86 are not compatible, or do not adhere well to each other, in which case the second polymer 84 can be selected to adhere well to both polymers and used as a tie layer to adhere polymers 82 and 86.

Fig. 10B shows a fastener 90 in which the hooks 92 are formed of three different polymers 94, 96, 98. This fastener would be formed in a manner similar to that described with reference to Fig. 10B, adding a further extruder to apply the third hook-forming polymer. This embodiment can provide combinations of properties difficult to obtain with only two polymers. Alternatively, the middle polymer 96 may be used as a "tie layer" to bond polymers 94 and 98 if, for example, these polymers are incompatible or do not adhere well to each other.

In either of the embodiments shown in Fig. 10A and 10B, more than one of the polymers may be a shape memory polymer. For example, two shape memory polymers that have different glass transition temperatures can be used, to give different degrees of shape change at different use temperatures.

Fig. 10C shows a fastener 100, similar to fastener 70 in Fig. 3, in which the base 102 and a lower portion 104 of hooks 106 are formed of a first polymer, and the upper portion 108 of the hooks is formed of a second polymer (upper portion 108 is somewhat larger in this case than tip portion 72 in Fig. 3). This fastener can be formed by the process of Fig. 5, by only partially filling the molding cavities using extruder 35, and then completing the filling of the cavities with extruder 47.

By utilizing combinations of two or more shape memory polymers on a single fastener tape, the fastener tape can be designed to exhibit peel or shear behavior that is a function of temperature. For example, if one third of the hooks return to a stable non-engaging position at 60°C, one third at 80°C, and one third at 100°C, the peel and shear of the tape will vary accordingly in that temperature range, from 100% at 60°C to 0% at 100°C. Such a fastener can be formed, for example, by coextruding, side-by-side, streams of the three materials to form a unitary web, and then processing the web to form a fastener, e.g., as shown in Fig. 4. This creates an "intelligent" fastener tape that "senses" the temperature and changes its properties accordingly.

In certain instances, hooks undergo damage during the manufacturing of the fastener product. Thus, it is desirable to provide a fastener product with male fastener elements that are better able to withstand manufacturing conditions. Often during manufacturing of the fastener product, hooks are bent over onto the sheet form base, for example, when the formed hooks are passed through a nip between two rolls. If the hook lacks the ability to spring back into its original shape, the hook may then become non-engageable. Thus, it is desirable to provide a fastener element that has the ability to return, after manufacturing is complete, to a stable shape in which the fastener element is loop-engaging.

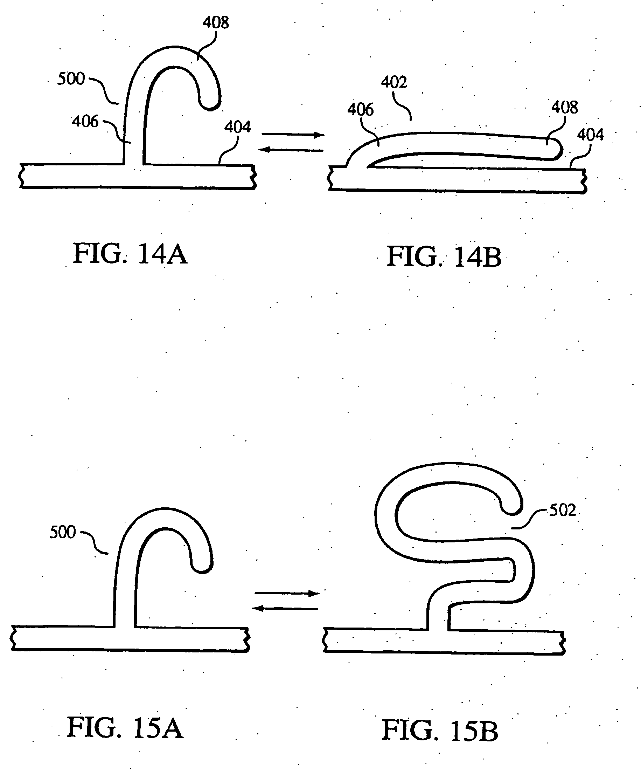

Referring to Figs. 14A and 14B, a hook 400 can be post formed into a metastable shape 402 where it is lying substantially flat against the surface of the sheet form backing 404. Once the manufacturing processes that could damage the hook 400 are completed, energy can be provided to the touch fastener to allow the hook 400 to return to its stable, crooked shape. As shape memory polymers tend to be expensive, in some instances the hook depicted in Figs. 14A and 14B may include a shape memory polymer only in the stem portion 406 and a non-shape memory polymer in the engaging portion 408.

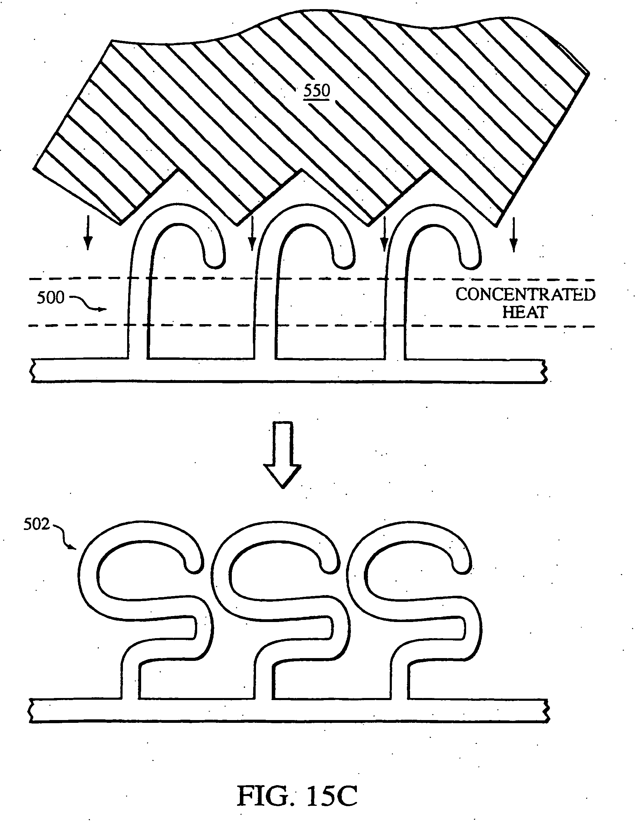

In some instances, it is desirable to provide fasteners having hooks that are less susceptible to damage while still providing some extent of engagement, for example, if the hook will not be returned to its stable shape until after use of the product has begun. Referring to Figs. 15A and 15B, a hook 500 (See Fig. 15A), can be processed subsequent to extrusion to provide a shaped fastener element 502 that is better able to withstand further processing (e.g., by heating the hook to a temperature greater than T_{g} and reforming the hook into an S-shape). For example, as shown in Fig. 15C, an inclined pulsating force 550 (e.g., a hammer) can be used to bend a heated hook 500 into an S-shape 502. During this process, the entire hook can be heated or, alternatively, only a portion of the hook can be heated.

The S-shaped fastener element 502, depicted in Fig. 15B, has some ability to engage a cooperative female fastener element, while also having a spring-like geometry that makes it more resilient as it proceeds through further processing (e.g., processing that physically bends, presses or pulls the fastener element with a force that could permanently deform the shape of a hook). Accordingly, the S-shaped fastener element has a "partially-engageable" shape that is able to engage (at least partially) an article having a complementary fastener element, while at the same time more effectively surviving post-processing than a traditionally shaped upright hook. After processing is complete, the fastener element 502 is heated to return it to its original, stable hook shape 500. This may be accomplished by exposing the fastener element to a heat source, or by the body temperature of a wearer, e.g., if the fastener is part of a garment. A "partially-engageable" fastener element could be useful in products that are sold pre-fastened, for example, in disposable absorbant articles such as training pants or refastenable adult incontinence products.

While an S-shaped fastener has been described as an example of a partially engaging fastener, other shapes in which the stem portion of the fastener elements defines a curve are also envisioned. For example, multiple-S-shaped hooks, spring shapes, zigzag shapes and coils can also help to disperse any forces to which the fastener elements are subjected during the processing of the touch fastener.

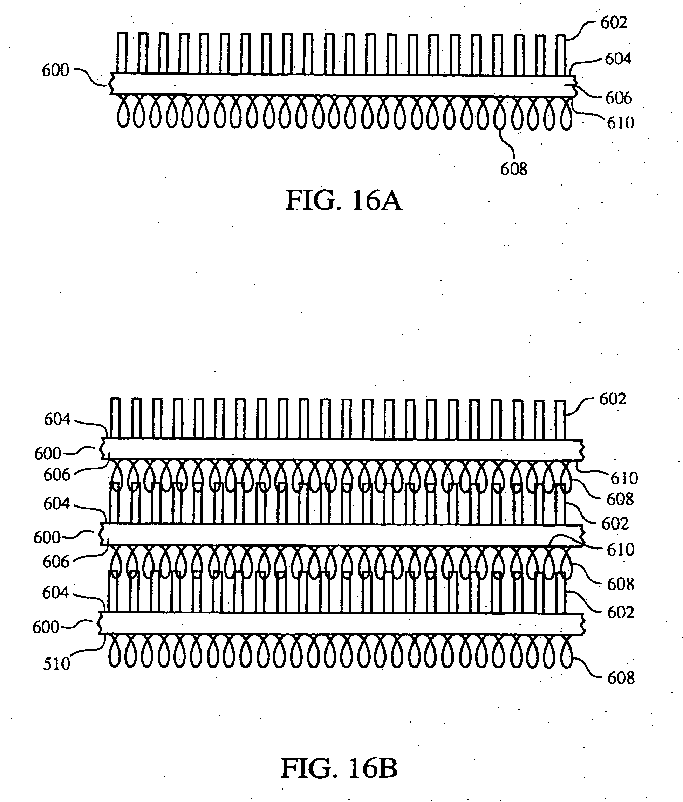

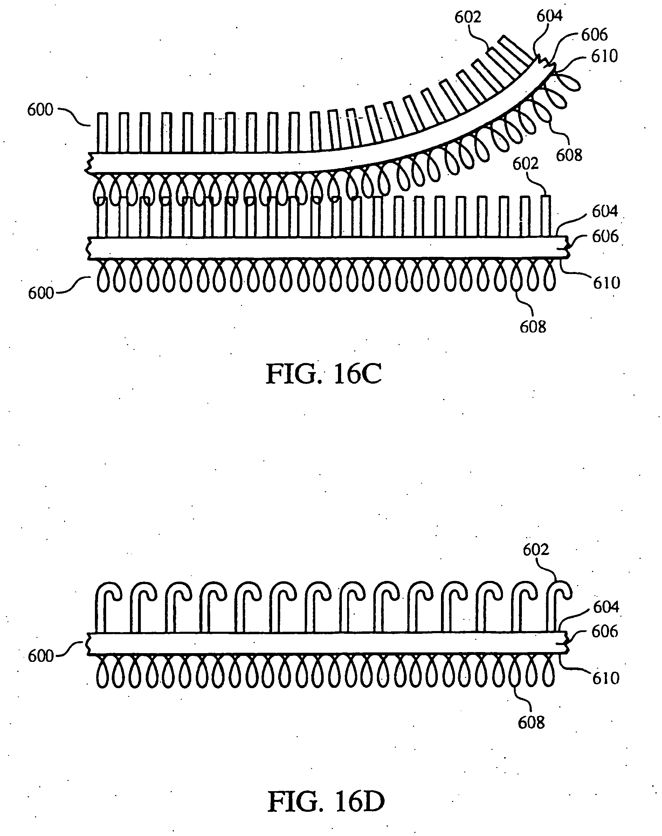

Fig. 16A shows a touch fastener product 600 (e.g., a laminate) having male fastener elements 602 extending from an upper surface 604 of a sheet form backing 606 and female fastener elements 608 extending from a lower surface 610 of the sheet form backing 606. The female fastener elements 608 may be part of a loop-bearing surface that is not necessarily intended for use in a fastener product, for example the surface of a carpet or loopy fabric. The male fastener elements 602 are made from a shape memory polymer and are shaped in a metastable, non-engageable position (i.e., straight stems). The subsequent application of energy, such as heat, will transform the shape of the male fastening elements 602 into stable engageable hooks (see Fig. 16D.)

The non-engaging meta-stable shape of the male fastener elements 602 is useful when stacking multiple touch fasteners 600. For example, when a plurality of touch fasteners 600 are stacked, as shown in Fig. 16B (or when a sheet of touch fastener 600 is wound into a roll form), the male fastener elements 602 of one touch fastener 600 are in contact with the female fastener elements 608 of another touch fastener 600.
Accordingly, when the male fastener elements are in an engageable position (e.g., are hook-shaped), damage to either the male fastener elements (e.g., a deformed or bent hook), the female fastener elements (e.g., a torn or pulled loop), or both may result when one of touch fasteners 600 is removed from the stack of touch fasteners (or, in the case of a wound roll of such a touch fastener, when the sheet of touch fastener laminate is unwound from the roll). Accordingly, touch fastener 600 may exhibit reduced engagement to the article with which is designed to engage. Moreover, even if damage does not occur, separating the stacked touch fasteners may be difficult and/or slow if the fastener elements are hook-shaped. Thus, because touch fastener 600 allows the male fastener elements to maintain a non-engageable shape 602 prior to final use of the touch fastener 600, the touch fasteners 600 can be separated quickly and easily without significant damage to the male or female fastener elements. (See Fig. 16C.)

In some instances, touch fastener 600 can be a rug having female fastener elements 608 made of carpeting material. The rug can be used for example in automobile floor mats or other applications.

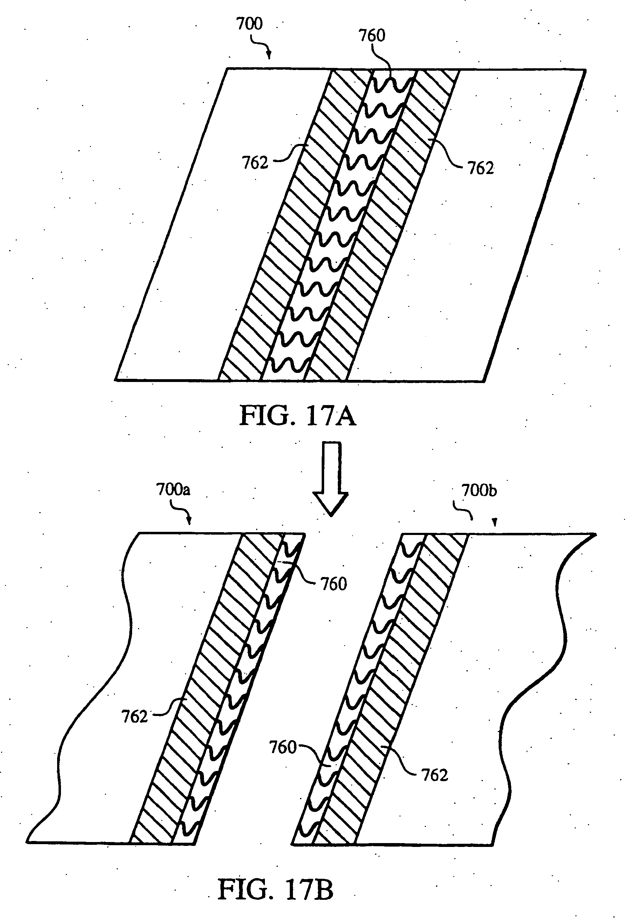

In some instances a laminate touch fastener 700 can be made having a central lane 760 substantially free of fastener elements, surrounded by two lanes of fastener elements 762 (e.g., hooks) all of which are positioned in the center of a spunbond web (see Fig. 17A.) In this instance, the touch fastener 700 can be used to form right and left fastener tabs 700a and 700b, e.g., such as could be used on a diaper (see Fig. 17B.) These tabs can be formed, for example, by cutting the laminate touch fastener 700 using a nested rotary die-cutter and then placing the touch fasteners 700a and 770b on an absorbent article (e.g., a diaper) using a cut and place module. The resultant fasteners 700a and 700b have hooks on one side and loops on the other, providing a soft, cloth-like ear that can be engaged with hooks from the opposite ear if the tabs are crossed during donning of the absorbent article.

While heat is described above as the energy that is provided to a shape memory polymer to enable transformation between a stable and a metastable shape, other energy sources are also appropriate, for example UV radiation, IR radiation, microwave, x-ray etc. These energy sources can be used both to initially form the polymer in its metastable shape (with application of a mechanical force) and also to return the polymer from its metastable to its stable shape.

## Claims

1. A fastener product (10,60,62,68,70,78,90,100,304,600,700,700a,700b) comprising
a sheet form backing (14,22,66,86,102,174,404,606) and
extending from the backing, a plurality of male fastener elements (12,21,23,61,64,75,214,305) each comprising a loop-engaging portion (72,108,408) and a stem portion (73,104,406), **characterized in that** one of the loop-engaging portion (72,108,408) or stem portion (73,104,406) comprises a shape memory polymer, and the other of the loop-engaging portion (72,108,408) or stem portion (73,104,406) comprises a non-shape memory polymer.

2. The fastener product (10,60,62,68,70,78,90,100,304,600,700,700a,700b) of claim 1 wherein the portion of the fastener element (12,21,23,61,64,75,214,305) comprising a shape memory polymer is substantially free of non-shape memory polymer or wherein the portion of the fastener element (12,21,23,61,64,75,214,305) comprising a non-shape memory polymer is substantially free of a shape memory polymer.

3. The fastener product (10,60,62,68,70,78,90,100,304,600,700,700a,700b) of claims 1 or 2 wherein the fastener elements (12,21,23,61,64,75,214,305) comprise hooks, mushroom shapes or palm tree shapes.

4. The fastener product (10,60,62,68,70,78,90,100,304,600,700,700a,700b) of any of the above claims wherein the sheet form backing (14,22,66,86,102,174,404,606) is formed of a non-shape memory polymer.

5. The fastener product (10,60,62,68,70,78,90,100,304,600,700,700a,700b) of any of the above claims wherein the glass transition temperature of the shape memory polymer is from about -40 to 150°C, for example from about 60 to 100 °C.

6. The fastener product (10,60,62,68,70,78,90,100,304,600,700,700a,700b) of any of the above claims wherein the shape memory polymer comprises a polyurethane.

7. The fastener product (10,60,62,68,70,78,90,100,304,600,700) of any of the above claims wherein the fastener element (12,21,23,61,64,75,214,305) is configured to change from a metastable hook or mushroom shape (23,212,402,500) to a stable substantially non-engaging shape (12, 21, 208) in response to a temperature change, for example wherein the substantially non-engaging shape (12, 21, 208) is a substantially straight stem or a bent-over hook or mushroom shape.

8. The fastener product (10,60,62,68,70,78,90,100,304,600,700) of any of claims 1 to 6 wherein the fastener element (12,21,23,61,64,75,214,305) is configured to change from a metastable substantially non-engaging shape (12, 21, 208) to a stable hook or mushroom shape in response to a temperature change, for example wherein the substantially non-engaging shape (12, 21, 208) is a substantially straight stem or wherein the substantially non-engaging shape (12, 21, 208) is a bent-over hook or mushroom shape.

9. The fastener product (10,60,62,68,70,78,90,100,304,600,700) of any of claims 1 to 6 wherein the fastener element is configured to change from a metastable substantially non-engaging shape (12, 21, 208) to a stable hook or mushroom shape in response to a source of radiant energy, such as UV, microwave, x-ray, or infrared, preferably infrared.

10. A method of forming a fastener product (10,60,62,68,70,78,90,100,304,600,700) comprising forming a plurality of male fastener elements (12,21,23,61,64,75,214,305) extending from a sheet form base (14,22,66,86,102,174,404,606), at least some of the fastener elements comprising a shape memory polymer, wherein the male fastener elements (12,21,23,61,64,75,214,305) comprise a stem portion (73,104,406) and a loop-engaging portion (72,108,408), **characterized in that** one of the loop-engaging portion (72,108,408) or stem portion (73,104,406) is formed of a shape memory polymer, and the other of the loop-engaging portion (72,108,408) or stem portion (73,104,406) is formed of a non-shape memory polymer:

11. The method of claim 10 wherein the forming step comprises forming male fastener elements (12,21,23,61,64,75,214,305), for example forming hooks.

12. The method of claim 10 or 11 further comprising co-extruding the shape memory polymer and the non-shape memory polymer to form the sheet-form base (14,22,66,86,102,174,404,606), wherein the forming step includes forming the fastener elements (12,21,23.61,64,75,214.305) from a portion of the sheet-form base (14,22,66,86,102,174,404,606).

13. The method of any of claims 10 to 12 wherein the fastener elements (12,21,23,61,64,75,214,305) comprise more than one shape memory polymer, and the shape memory polymers have different glass transition temperatures.

14. The method of claim 10 or 11 further comprising co-extruding the shape memory polymers to form the sheet-form base (14,22,66,86,102,174,404,606), wherein the forming step includes forming the fastener elements (12,21,23,61,64,75,214,305) from a portion of the sheet-form base (14,22,66,86,102,174,404,606).

15. The method of any of claims 10 to 14 wherein the glass transition temperature of the shape memory polymer is from about -40 to 150 °C, for example from about 60 to 100 °C.

16. The method of any of claims 10 to 15 wherein the forming step comprises forming fastener elements (12,21,23,61,64,75,214,305) having a substantially non-engaging shape (12, 21, 208), for example a substantially straight stem or a bent-over hook or mushroom shape.

17. The method of claim 16 further comprising heating the fastener elements (12,21,23,61,64,75,214,305) to a formation temperature and deforming the fastener elements to a metastable hook or mushroom shape.

18. The method of claim 10 wherein the forming step comprises forming fastener elements (12,21,23,61,64,75,214,305) having a hook or mushroom shape.

19. The method of claim 18 further comprising heating the fastener elements (12,21,23,61,64,75,214,305) to a formation temperature and deforming the fastener elements (12,21,23,61,64,75,214,305) to a metastable substantially non-engaging shape (12, 21, 208), for example a substantially straight stem or a bent-over hook or mushroom shape.

20. An absorbent article (300) comprising:
an absorbent material; and
a fastener (10,60,62,68,Z0,78,90,100,304,600,700) for securing the article on a wearer or a garment, the fastener comprising a female fastener component (306) on a first portion of the article (300), and a male fastener component (304) on a second portion of the article (300), arranged for cooperative engagement with the female fastener component (306);
the male fastener component (304) including a plurality of male fastener elements (12,21,23,61,64,75,214,305) comprising a shape memory polymer, wherein each male fastener element comprises a loop-engaging portion (72,108,408) and a stem portion (73,104,406), **characterized in that** one of the loop-engaging portion (72,108,408) or stem portion (73,104,406) comprises a shape memory polymer, and the other of the loop-engaging portion (72,108,408) or stem portion (73,104,406) comprises a non-shape memory polymer.

## Patentansprüche

1. Verschluss- bzw. Befestigungsprodukt (10, 60, 62, 68, 70, 78, 90, 100, 304, 600, 700, 700a, 700b), das umfasst:
eine schichtförmige Unterschicht bzw. Verstärkung (14, 22, 66, 86, 102, 174, 404, 606) und
sich von der Verstärkung aus erstreckend eine Vielzahl von männlichen bzw. aufzunehmenden Verschlusselementen (12, 21, 23, 61, 64, 75, 214, 305), von denen jedes einen Schlaufen bzw. Schlingen bzw. Schleifen ergreifenden Abschnitt (72, 108, 408) und einen Stielabschnitt (73, 104, 406) umfasst, **dadurch gekennzeichnet, dass** der Schlaufen ergreifende Abschnitt (72, 108, 408) oder der Stielabschnitt (73, 104, 406) ein Formgedächtnispolymer umfasst und der andere des Schlaufen ergreifenden Abschnitts (72, 108, 408) oder des Stielabschnitts (73, 104, 406) ein Polymer ohne Formgedächtnis umfasst.

2. Verschlussprodukt (10, 60, 62, 68, 70, 78, 90, 100, 304, 600, 700, 700a, 700b) nach Anspruch 1, wobei der Abschnitt des Verschlusselements (12, 21, 23, 61, 64, 75, 214, 305), der ein Formgedächtnispolymer umfasst, im Wesentlichen frei von Polymer ohne Formgedächtnis ist oder wobei der Abschnitt des Verschlusselements (12, 21, 23, 61, 64, 75, 214, 305), der ein Polymer ohne Formgedächtnis umfasst, im Wesentlichen frei von Formgedächtnispolymer ist.

3. Verschlussprodukt (10, 60, 62, 68, 70, 78, 90, 100, 304, 600, 700, 700a, 700b) nach Anspruch 1 oder 2, wobei die Verschlusselemente (12, 21, 23, 61, 64, 75, 214, 305) Haken, Pilzformen oder Palmenbaumformen umfassen.

4. Verschlussprodukt (10, 60, 62, 68, 70, 78, 90, 100, 304, 600, 700, 700a, 700b) nach einem der vorangehenden Ansprüche, wobei die schichtförmige Verstärkung (14, 22, 66, 86, 102, 174, 404, 606) aus einem Polymer ohne Formgedächtnis ausgebildet ist.

5. Verschlussprodukt (10, 60, 62, 68, 70, 78, 90, 100, 304, 600, 700, 700a, 700b) nach einem der vorangehenden Ansprüche, wobei die Glasübergangstemperatur des Formgedächtnispolymers von etwa -40 bis 150°C, zum Beispiel von etwa 60 bis 100°C, beträgt.

6. Verschlussprodukt (10, 60, 62, 68, 70, 78, 90, 100, 304, 600, 700, 700a, 700b) nach einem der vorangehenden Ansprüche, wobei das Formgedächtnispolymer ein Polyurethan umfasst.

7. Verschlussprodukt (10, 60, 62, 68, 70, 78, 90, 100, 304, 600, 700) nach einem der vorangehenden Ansprüche, wobei das Verschlusselement (12, 21, 23, 61, 64, 75, 214, 305) derart aufgebaut ist, dass es von einer metastabilen Haken- oder Pilzform (23, 212, 402, 500) ansprechend auf eine Temperaturänderung in eine stabile im Wesentlichen nicht eingreifende Form (12, 21, 208) wechselt, wobei die im Wesentlichen nicht eingreifende Form (12, 21, 208) zum Beispiel ein im Wesentlichen gerader Stiel oder eine umgebogene Haken- oder Pilzform ist.

8. Verschlussprodukt (10, 60, 62, 68, 70, 78, 90, 100, 304, 600, 700) nach einem der vorangehenden Ansprüche 1 bis 6, wobei das Verschlusselement (12, 21, 23, 61, 64, 75, 214, 305) derart aufgebaut ist, dass es von einer metastabilen im Wesentlichen nicht eingreifenden Form (12, 21, 208) ansprechend auf eine Temperaturänderung in eine stabile Haken- oder Pilzform wechselt, wobei die im Wesentlichen nicht eingreifende Form (12, 21, 208) zum Beispiel ein im Wesentlichen gerader Stiel ist oder wobei die im Wesentlichen nicht eingreifende Form (12, 21, 208) eine umgebogene Haken- oder Pilzform ist.

9. Verschlussprodukt (10, 60, 62, 68, 70, 78, 90, 100, 304, 600, 700) nach einem der vorangehenden Ansprüche 1 bis 6, wobei das Verschlusselement derart aufgebaut ist, dass es von einer metastabilen im Wesentlichen nicht eingreifenden Form (12, 21, 208) ansprechend auf eine Strahlungsenergiequelle, wie etwa UV, Mikrowelle, Röntgenstrahlung oder Infrarot, vorzugsweise Infrarot, in eine stabile Haken- oder Pilzform wechselt.

10. Verfahren zum Ausbilden eines Verschluss- bzw. Befestigungsprodukts (10, 60, 62, 68, 70, 78, 90, 100, 304, 600, 700), welches das Ausbilden einer Vielzahl von männlichen bzw. aufzunehmenden Verschlusselementen (12, 21, 23, 61, 64, 75, 214, 305) umfasst, die sich von einer schichtförmigen Verstärkung (14, 22, 66, 86, 102, 174, 404, 606) erstrecken, wobei zumindest einige der Verschlusselemente ein Formgedächtnispolymer umfassen, wobei die männlichen Verschlusselemente (12, 21, 23, 61, 64, 75, 214, 305) einen Stielabschnitt (73, 104, 406) und einen Schlaufen ergreifenden Abschnitt (72, 108, 408) umfassen, **dadurch gekennzeichnet, dass** der Schlaufen ergreifende Abschnitt (72, 108, 408) oder der Stielabschnitt (73, 104, 406) aus einem Formgedächtnispolymer ausgebildet ist und der andere des Schlaufen ergreifenden Abschnitts (72, 108, 408) oder des Stielabschnitts (73, 104, 406) aus einem Polymer ohne Formgedächtnis ausgebildet ist.

11. Verfahren nach Anspruch 10, wobei der Ausbildungsschritt das Ausbilden männlicher Verschlusselemente (12, 21, 23, 61, 64, 75, 214, 305), zum Beispiel das Ausbilden von Haken, umfasst.

12. Verfahren nach Anspruch 10 oder 11, das ferner das Koextrudieren des Formgedächtnispolymers und des Polymers ohne Formgedächtnis umfasst, um die schichtförmige Basis (14, 22, 66, 86, 102, 174, 404, 606) auszubilden, wobei der Ausbildungsschritt das Ausbilden der Verschlusselemente (12, 21, 23, 61, 64, 75, 214, 305) aus einem Abschnitt der schichtförmigen Basis (14, 22, 66, 86, 102, 174, 404, 606) umfasst.

13. Verfahren nach einem der Ansprüche 10 bis 12, wobei die Verschlusselemente (12, 21, 23, 61, 64, 75, 214, 305) mehr als ein Formgedächtnispolymer umfassen, und die Formgedächtnispolymere verschiedene Glasübergangstemperaturen haben.

14. Verfahren nach Anspruch 10 oder 11, das ferner das Koextrudieren der Formgedächtnispolymere umfasst, um die die schichtförmige Basis (14, 22, 66, 86, 102, 174, 404, 606) auszubilden, wobei der Ausbildungsschritt das Ausbilden der Verschlusselemente (12, 21, 23, 61, 64, 75, 214, 305) aus einem Abschnitt der schichtförmigen Basis (14, 22, 66, 86, 102, 174, 404, 606) umfasst.

15. Verfahren nach einem der Ansprüche 10 bis 14, wobei die Glasübergangstemperatur des Formgedächtnispolymers von etwa -40 bis 150°C, zum Beispiel von etwa 60 bis 100°C, ist.

16. Verfahren nach einem der Ansprüche 10 bis 15, wobei der Ausbildungsschritt das Ausbilden von Verschlusselementen (12, 21, 23, 61, 64, 75, 214, 305) mit einer im Wesentlichen nicht ein- bzw. ergreifenden Form (12, 21, 208), zum Beispiel eines im Wesentlichen geraden Stiels oder einer umgebogenen Haken- oder Filzform, umfasst.

17. Verfahren nach Anspruch 16, das ferner das Erwärmen der Verschlusselemente (12, 21, 23, 61, 64, 75, 214, 305) auf eine Formungstemperatur und das Verformen der Verschlusselemente in eine metastabile Haken- oder Pilzform umfasst.

18. Verfahren nach Anspruch 10, wobei der Ausbildungsschritt das Ausbilden von Verschlusselementen (12, 21, 23, 61, 64, 75, 214, 305) mit einer Haken- oder Pilzform umfasst.

19. Verfahren nach Anspruch 18, das ferner das Erwärmen der Verschlusselemente (12, 21, 23, 61, 64, 75, 214, 305) auf eine Formungstemperatur und das Verformen der Verschlusselemente (12, 21, 23, 61, 64, 75, 214, 305) in eine metastabile im Wesentlichen nicht eingreifende Form (12, 21, 208), zum Beispiel einen im Wesentlichen geraden Stiel oder eine umgebogene Haken- oder Pilzform, umfasst.

20. Absorbierender Artikel (300), der umfasst:
ein absorbierendes Material; und
einen Verschluss (10, 60, 62, 68, 70, 78, 90, 100, 304, 600, 700) zum Befestigen des Artikels an einem Träger oder einem Kleidungsstück, wobei der Verschluss umfasst: eine weibliche oder aufnehmende Verschlusskomponente (306) auf einem ersten Abschnitt des Artikels (300) und eine männliche bzw. eine aufzunehmende Verschlusskomponente (304) auf einem zweiten Abschnitt des Artikels (300), die für das zusammenwirkende Eingreifen mit der weiblichen Verschlusskomponente (306) angeordnet ist;
wobei die männliche Verschlusskomponente (304) eine Vielzahl der männlichen Verschlusselemente (12, 21, 23, 61, 64, 75, 214, 305) enthält, welche ein Formgedächtnispolymer umfassen, wobei jedes männliche Verschlusselement einen in Schlaufen eingreifenden bzw. Schlaufen ergreifenden Abschnitt (72, 108, 408) und einen Stielabschnitt (73, 104, 406) umfasst, **dadurch gekennzeichnet, dass** der Schlaufen ergreifende Abschnitt (72, 108, 408) oder der Stielabschnitt (73, 104, 406) ein Formgedächtnispolymer umfasst und der andere des Schlaufen ergreifenden Abschnitts (72, 108, 408) oder des Stielabschnitts (73, 104, 406) ein Polymer ohne Formgedächtnis umfasst.

## Revendications

1. Produit de fixation (10, 60, 62, 68, 70, 78, 90, 100, 304, 600, 700, 700a, 700b) comprenant :
une couche dorsale en forme de feuille (14, 22, 66, 86, 102, 174, 404, 606) ; et
une pluralité d'éléments de fixation mâles (12, 21, 23, 61, 64, 75, 214, 305) s'étendant depuis la couche dorsale et comprenant chacun une partie pouvant être engagée dans des bouclettes (72, 108, 408) et une partie de tige (73, 104, 406) **caractérisé en ce qu'**une des parties pouvant être engagées dans des bouclettes (72, 108, 408) ou une des parties de tige (73, 104, 406) comprend un polymère à mémoire de forme, et **en ce que** l'autre des parties pouvant être engagées dans des bouclettes (72, 108, 408) ou l'autre des parties de tige (73, 104, 406) comprend un polymère sans mémoire de forme.

2. Produit de fixation (10, 60, 62, 68, 70, 78, 90, 100, 304, 600, 700, 700a, 700b) selon la revendication 1, dans lequel la partie de l'élément de fixation (12, 21, 23, 61, 64, 75, 214, 305) qui comprend un polymère à mémoire de forme est sensiblement exempte de polymère sans mémoire de forme ou dans lequel la partie de l'élément de fixation (12, 21, 23, 61, 64, 75, 214, 305) qui comprend un polymère sans mémoire de forme est sensiblement exempte de polymère à mémoire de forme.

3. Produit de fixation (10, 60, 62, 68, 70, 78, 90, 100, 304, 600, 700, 700a, 700b) selon l'une ou l'autre des revendications 1 et 2, dans lequel les éléments de fixation (12, 21, 23, 61, 64, 75, 214, 305) comprennent des crochets, des formes de champignon ou des formes de palmier.

4. Produit de fixation (10, 60, 62, 68, 70, 78, 90, 100, 304, 600, 700, 700a, 700b) selon l'une quelconque des revendications ci-dessus, dans lequel la couche dorsale en forme de feuille (14, 22, 66, 86, 102, 174, 404, 606) est constituée d'un polymère sans mémoire de forme.

5. Produit de fixation (10, 60, 62, 68, 70, 78, 90, 100, 304, 600, 700, 700a, 700b) selon l'une quelconque des revendications ci-dessus, dans lequel la température de transition vitreuse du polymère à mémoire de forme est de -40 à 150°C environ, par exemple de 60 à 100°C environ.

6. Produit de fixation (10, 60, 62, 68, 70, 78, 90, 100, 304, 600, 700, 700a, 700b) selon l'une quelconque des revendications ci-dessus, dans lequel le polymère à mémoire de forme comprend un polyuréthane.

7. Produit de fixation (10, 60, 62, 68, 70, 78, 90, 100, 304, 600, 700) selon l'une quelconque des revendications ci-dessus, dans lequel l'élément de fixation (12, 21, 23, 61, 64, 75, 214, 305) est configuré de manière à se modifier depuis une forme métastable de crochet ou de champignon (23, 212, 402, 500) sur une forme stable essentiellement sans engagement (12, 21, 208) en réponse à une modification de la température, par exemple dans lequel la forme essentiellement sans engagement (12, 21, 208) est une tige sensiblement droite ou une forme de crochet recourbé ou une forme de champignon.

8. Produit de fixation (10, 60, 62, 68, 70, 78, 90, 100, 304, 600, 700) selon l'une quelconque des revendications 1 à 6, dans lequel l'élément de fixation (12, 21, 23, 61, 64, 75, 214, 305) est configuré de manière à se modifier depuis une forme métastable essentiellement sans engagement (12, 21, 208) sur une forme stable de crochet ou de champignon en réponse à une modification de la température, par exemple dans lequel la forme essentiellement sans engagement (12, 21, 208) est une tige sensiblement droite ou dans lequel la forme essentiellement sans engagement (12, 21, 208) est une forme de crochet recourbé ou une forme de champignon.

9. Produit de fixation (10, 60, 62, 68, 70, 78, 90, 100, 304, 600, 700) selon l'une quelconque des revendications 1 à 6, dans lequel l'élément de fixation est configuré de manière à se modifier depuis une forme métastable essentiellement sans engagement (12, 21, 208) sur une forme stable de crochet ou de champignon en réponse à une source d'énergie rayonnante, telle que des rayons ultraviolets, une micro-onde, un rayon X ou infrarouge, de préférence infrarouge.

10. Procédé de formage d'un produit de fixation (10, 60, 62, 68, 70, 78, 90, 100, 304, 600, 700) comprenant le formage d'une pluralité d'éléments de fixation mâles (12, 21, 23, 61, 64, 75, 214, 305) s'étendant depuis une base en forme de feuille (14, 22, 66, 86, 102, 174, 404, 606), au moins certains des éléments de fixation comprenant un polymère à mémoire de forme, dans lequel les éléments de fixation mâles (12, 21, 23, 61, 64, 75, 214, 305) comprennent une partie de tige (73, 104, 406) et une partie pouvant être engagée dans des bouclettes (72, 108, 408), **caractérisé en ce qu'**une des parties pouvant être engagées dans des bouclettes (72, 108, 408) ou une des parties de tige (73, 104, 406) est constituée d'un polymère à mémoire de forme, et **en ce que** l'autre des parties pouvant être engagées dans des bouclettes (72, 108, 408) ou l'autre des parties de tige (73, 104, 406) est constituée d'un polymère sans mémoire de forme.

11. Procédé selon la revendication 10, dans lequel l'étape de formage comprend le formage des éléments de fixation mâles (12, 21, 23, 61, 64, 75, 214, 305), par exemple le formage de crochets.

12. Procédé selon l'une ou l'autre des revendications 10 et 11, comprenant en outre la co-extrusion du polymère à mémoire de forme et du polymère sans mémoire de forme afin de former la base en forme de feuille (14, 22, 66, 86, 102, 174, 404, 606), dans lequel l'étape de formage inclut le formage des éléments de fixation (12, 21, 23, 61, 64, 75, 214, 305) depuis une partie de la base en forme de feuille (14, 22, 66, 86, 102, 174, 404, 606).

13. Procédé selon l'une quelconque des revendications 10 à 12, dans lequel les éléments de fixation (12, 21, 23, 61, 64, 75, 214, 305) comprennent plus d'un polymère à mémoire de forme et dans lequel les polymères à mémoire de forme ont des températures de transition vitreuse différentes.

14. Procédé selon l'une ou l'autre des revendications 10 et 11, comprenant en outre la co-extrusion des polymères à mémoire de forme afin de former la base en forme de feuille (14, 22, 66, 86, 102, 174, 404, 606), dans lequel l'étape de formage inclut le formage des éléments de fixation (12, 21, 23, 61, 64, 75, 214, 305) depuis une partie de la base en forme de feuille (14, 22, 66, 86, 102, 174, 404, 606).

15. Procédé selon l'une quelconque des revendications 10 à 14, dans lequel la température de transition vitreuse du polymère à mémoire de forme est de -40 à 150°C environ, par exemple de 60 à 100°C environ.

16. Procédé selon l'une quelconque des revendications 10 à 15, dans lequel l'étape de formage comprend le formage des éléments de fixation (12, 21, 23, 61, 64, 75, 214, 305) ayant une forme essentiellement sans engagement (12, 21, 208), par exemple une tige sensiblement droite ou une forme de crochet recourbé ou une forme de champignon.

17. Procédé selon la revendication 16, comprenant en outre le chauffage des éléments de fixation (12, 21, 23, 61, 64, 75, 214, 305) à une température de conformation et la déformation des éléments de fixation sur une forme métastable de crochet ou de champignon.

18. Procédé selon la revendication 10, dans lequel l'étape de formage comprend le formage des éléments de fixation (12, 21, 23, 61, 64, 75, 214, 305) ayant une forme de crochet ou une forme de champignon.

19. Procédé selon la revendication 18, comprenant en outre le chauffage des éléments de fixation (12, 21, 23, 61, 64, 75, 214, 305) à une température de conformation et la déformation des éléments de fixation (12, 21, 23, 61, 64, 75, 214, 305) sur une forme métastable essentiellement sans engagement (12, 21, 208), par exemple une tige sensiblement droite ou une forme de crochet recourbé ou une forme de champignon.

20. Article absorbant (300) comprenant :
un matériau absorbant ; et
une fixation (10, 60, 62, 68, 70, 78, 90, 100, 304, 600, 700) pour fixer l'article sur une personne vêtue ou sur un vêtement, la fixation comprenant un composant de fixation femelle (306) sur une première partie dé l'article (300), et un composant de fixation mâle (304) sur une seconde partie de l'article (300) agencé pour l'engagement par coopération avec le composant de fixation femelle (306) ;
le composant de fixation mâle (304) incluant une pluralité d'éléments de fixation mâles (12, 21, 23, 61, 64, 75, 214, 305) qui comprennent un polymère à mémoire de forme, sachant que chaque élément de fixation mâle comprend une partie pouvant être engagée dans des bouclettes (72, 108, 408) et une partie de tige (73, 104, 406), **caractérisé en ce qu'**une des parties pouvant être engagées dans des bouclettes (72, 108, 408) ou une des parties de tige (73, 104, 406) comprend un polymère à mémoire de forme, et **en ce que** l'autre des parties pouvant être engagées dans des bouclettes (72, 108, 408) ou l'autre des parties de tige (73, 104, 406) comprend un polymère sans mémoire de forme.
